# EUROPEAN PATENT APPLICATION

(11) **EP 3 023 681 A1**
(43) Date of publication of application: **25.05.2016**
(21) Application number: 15194423.8
(22) Date of filing: 13.11.2015
(51) Int. Cl.: F16L 37/096, B60H 1/00, F16L 37/56

(54) **SUBASSEMBLY HAVING A FLANGE AND A TEST APPARATUS**

(30) Priority: 20.11.2014 DE 102014117009
(71) Applicant: Valeo Klimasysteme GmbH, 96476 Bad Rodach (DE)
(72) Inventor: WEBER, Jens, 96515 SONNEBERG (DE)
(74) Representative: Metz, Gaëlle

(57) **Abstract**

In a subassembly having a flange (100) that has at least one fluid port (20), in particular for a vehicle air-conditioning system, which flange is connected fluid-tightly to at least one fluid line (18), and having a test apparatus, which has at least one fluid port and two oppositely arranged movable fixing arms (136), two fixing structures (132), which come into engagement with the fixing arms (136) of the test apparatus and hold the fluid port (20) of the flange (100) in connection with the fluid port of the test apparatus, are provided on oppositely situated sections of a circumferential wall (116) of the flange (100). A flange (100) suitable for a subassembly of this kind has two parallel end faces (112, 114) and a circumferential wall (116) extending between the end faces (112, 114), wherein at least one fluid port (20) of the flange (100) is arranged on a first end face (112), and fixing structures (132) are formed on opposite sections of the circumferential wall (116).

## Description

The invention relates to a subassembly having a flange that has at least one fluid port, and having a test apparatus, which has at least one fluid port. Moreover, the invention relates to a flange, in particular for a subassembly of this kind.

The leak-tightness of fluid line connections in vehicle air-conditioning systems is tested in a known manner by attaching a test apparatus to an already installed flange of a component of the air-conditioning system and subjecting the respective component to a predetermined pressure. It is conventional for the test apparatus to be secured on the flange from the rear side of the flange.

However, if the flange is already mounted on an air-conditioning system or in a seal in an opening of a bulkhead of the vehicle, for example, as is typical, for instance, of the components of the vehicle air-conditioning system which are in the interior of the vehicle, the rear side of the flange is generally accessible only with difficulty.

It is the object of the invention to enable rapid and pressure-tight fastening of a test apparatus, even in the case of flanges already mounted in the final installation positions thereof, and thus to simplify the testing of vehicle air-conditioning components, even in the already mounted state.

This is achieved with a subassembly having a flange that has at least one fluid port, which flange is connected fluid-tightly to at least one fluid line, and having a test apparatus, which has at least one fluid port and two oppositely arranged movable fixing arms. Two fixing structures, which come into engagement with the fixing arms of the test apparatus and hold the fluid port of the flange in connection with the fluid port of the test apparatus, are provided on the outer circumference of the flange, on opposite sections of the circumferential wall. The fixing structures on the flange make it possible to fit the test apparatus from the free connection side of the flange and to fix it on the flange by means of the fixing arms.

The fixing structures can also be used as a positioning aid and to guide the fixing arms and thus for correct positioning of the fluid ports of the test apparatus on those of the flange.

In another function, the fixing structures can likewise be used during the final installation of the respective components of the vehicle air-conditioning system in the vehicle to guide and position the components to be connected therewith.

The fixing arms preferably each have a locking structure complementary to the fixing structure in order to ensure reliable engagement of the fixing arms on the fixing structures.

Each of the fixing arms preferably has a contact portion, which engages behind the flange on a rearward end face. In this way, secure fastening of the test apparatus on the flange is achieved. The space requirement for the rear engagement by the fixing arms is relatively small, and it is thus a relatively simple matter to design any seals that may be present in such a way that they can engage behind a section or sections of an end face of the flange.

A flange, which is suitable for use with a test apparatus in a subassembly described above, has two parallel end faces and a circumferential wall extending between the end faces. At least one fluid port of the flange is arranged on a first end face, and fixing structures are formed on opposite sections of the circumferential wall.

The fixing structure is in each case formed by at least one projection in the circumferential wall, for example. As an alternative, it would also be possible to provide at least one depression.

The projection can extend over the entire height of the circumferential wall between the end faces.

The fixing structure in each case preferably has a constant width and, in particular, is a web of constant width, making the production of the flange a simple matter, even by injection moulding, extrusion or forming, for example.

The fixing structures are preferably formed integrally with the body of the flange and can be formed directly at the same time during the production thereof.

In particular, the fixing structures are situated away from corners of the flange in the case of a rectangular flange. The fixing structures are preferably restricted to the circumferential wall.

The end faces of the flange are substantially rectangular or oval, for example, and the fixing structures are arranged on opposite narrow sides and/or on opposite broad sides. The arrangement of the fixing structures is therefore very flexible and can be adapted easily to the installation position of the flange, e.g. in a seal.

Two fluid ports can be provided on the flange, but it is also possible to arrange just one or, alternatively, more than two fluid ports on a flange.

In particular, the flange is plate-shaped.

The invention is described in greater detail below by means of two examples with reference to the attached drawings. In the drawings:
- Figure 1 shows a schematic perspective view of a flange known from the prior art with two fluid lines connected thereto;
- Figure 2 shows a schematic sectional view through a portion of an air-conditioning system housing with an inserted seal, in which a conventional flange is accommodated,
- Figure 3 shows a schematic perspective view of a flange according to the invention in accordance with a first embodiment;
- Figure 4 shows a schematic perspective view of a subassembly according to the invention having the flange from Figure 3, which is gripped by two fixing arms of a test apparatus;
- Figure 5 shows the subassembly from Figure 4 during the locking of the fixing arms;
- Figure 6 shows a schematic sectional view of a subassembly according to the invention comprising a flange and a test apparatus before the locking of the fixing arms of the test apparatus; and
- Figure 7 shows the subassembly from Figure 6 with locked fixing arms of the test apparatus; and
- Figure 8 shows a flange according to the invention in accordance with a second embodiment.

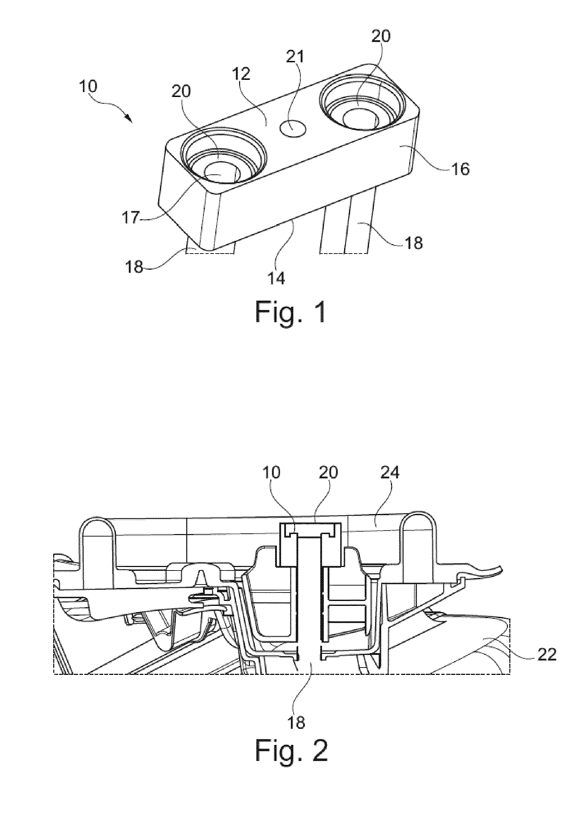

Figure 1 shows a conventional flange 10 having two opposite end faces 12, 14, which are parallel to one another and are each shaped approximately as rectangles, and a circumferential wall 16, which extends between the two end faces 12, 14. The flange 10 is substantially plate-shaped or cuboidal.

Two through openings 17 pass through the body of the flange 10, said openings each being connected fluid-tightly to a fluid line 18 at the rearward end of the flange 10 in Figure 1 and each forming a fluid port 20 on the upper side in Figure 1. A screw fastener opening 21, by means of which the flange 10 can be screwed to an adjoining component of a vehicle air-conditioning system, for example, in its final installation position, is provided between the two fluid ports 20.

Figure 2 shows a flange 10 of this kind inserted into a seal 24 on an air-conditioning housing 22 of a vehicle (not shown specifically), wherein the fluid lines 18 are connected, for example, to components of a vehicle air-conditioning system which are within the interior of the vehicle and which comprise an evaporator (not shown specifically).

The seal 24 and the air-conditioning housing 22 are designed in such a way that the rearward end face 14 of the flange 10 is not freely accessible from the side.

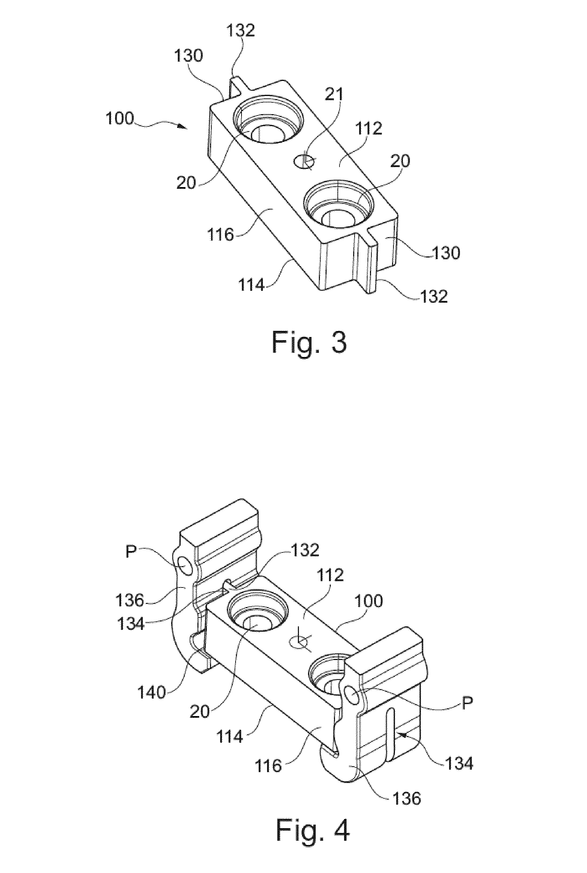

Figure 3 shows a flange 100 according to the invention, which, like the known flange 10, has two parallel end faces 112, 114 and a circumferential wall 116 connecting said end faces. In the case of flange 100 too, two fluid ports 20 are provided, which are of similar design to the fluid ports 20 of the known flange 10.

In this embodiment, the end faces 112, 114 are substantially rectangular. A fixing structure 132 is provided on each of the two narrow sides 130 of the circumferential wall 116. Here, the fixing structure 132 is in the form of a projection which protrudes perpendicularly from the circumferential wall 116 and forms a web which extends continuously from the upper end face 112 to the lower end face 114. The web has a constant width and thickness over its entire length.

Of course, it is also possible to form the fixing structures in a different configuration, e.g. only over part of the height of the circumferential wall or with dimensions that vary along the length of the fixing structure. As an alternative, the fixing structures could also be embodied as depressions in the circumferential wall in the form of continuous grooves or as recesses limited to part of the height of the circumferential wall. It would likewise be possible to provide a plurality of projections and/or depressions on each side of the flange. This applies to all the embodiments.

The fixing structures 132 are matched to corresponding locking structures 134 on two opposite fixing arms 136 of a test apparatus 138, which can be pivoted about a pivoting point P (see Figures 4 to 7). The test apparatus 138 serves to test the components connected to the flange 100, e.g. components of a vehicle air-conditioning system (not shown specifically), for pressure tightness.

The fixing arms 136 are arranged in such a way that they can be pivoted perpendicularly to the narrow sides 130 of the flange 100 and can thus come into engagement with the fixing structures 132.

In this example, each of the fixing arms 136 has a contact portion 140, which engages behind the rearward end face 114 of the flange 100 in the locked state of the fixing arms 136 and which then rests flat on the end face 114 and thus secures the fixing arm 136 on the flange 100 in the axial direction A.

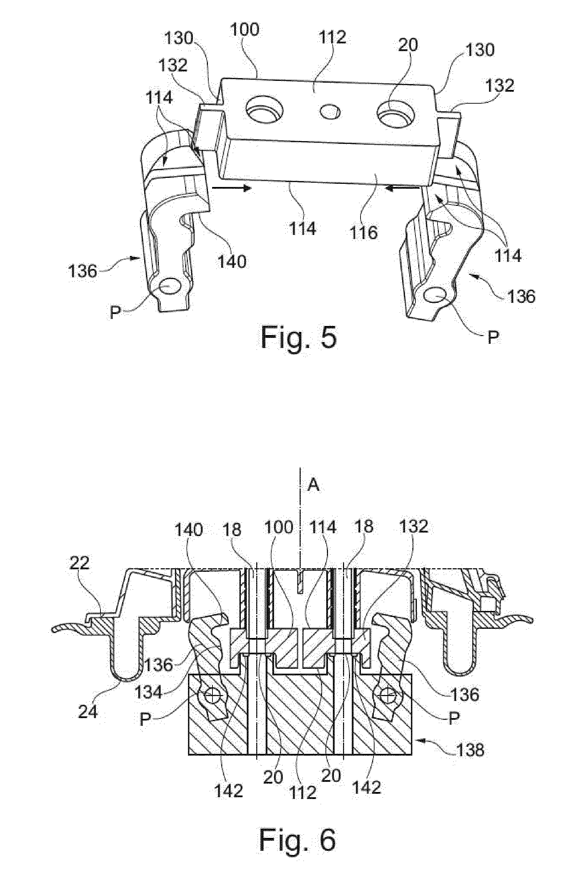

The fixing arms 136 can be preloaded in the closing direction (see Figure 5). In order to make engagement behind the flange 100 easier, guide bevels 141 are formed on the outside of the fixing arms 136, said guide bevels pushing the fixing arms 136 outwards away from the flange 100 when they come into contact with the narrow sides 130 and the fixing structures 132.

Here, guide bevels 141 are provided, on the one hand, on the free, hook-shaped ends of the fixing arms 136 in order to enable the fixing arms 136 to be pushed apart upon contact with the flange 100. On the other hand, further, lateral guide bevels 141 are provided on the axial end of the fixing arms 136, said bevels bringing about lateral positioning of the fixing arms relative to the fixing structures 132.

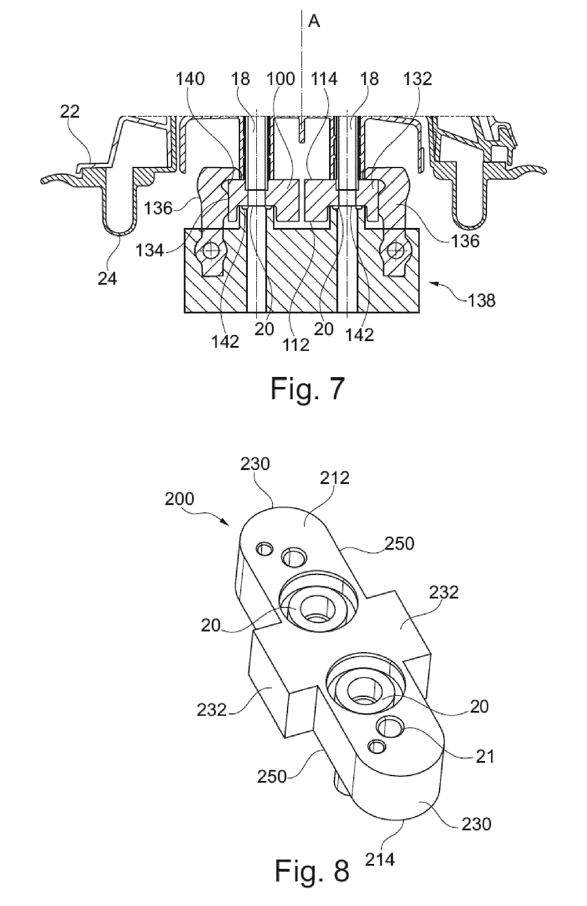

Figures 6 and 7 show the fixing of the test apparatus 138 on a flange 100, which is inserted into a seal 24 on an air-conditioning housing 22, as in the example in Figure 2. In this case, the seal 24 is designed in such a way that a gap wide enough to bring the fixing arms 136 into contact with the fixing structures 132 is formed at the side of the narrow sides 130 of the flange 100. Moreover, the rear end face 114 of the flange 100 is free locally to such an extent that the contact portions 140 of the fixing arms 136 can engage behind the flange 100.

The test apparatus 138 has a number of fluid ports 142 corresponding to the number and arrangement of the fluid ports 20 of the flange 100, and these fluid ports 142 must be positioned accurately on fluid ports 20. During the positioning of the test apparatus 138 on the flange 100, the fixing arms 136 are pushed apart, as shown in Figure 6. By way of the guide bevels 141, they ensure correct positioning of fluid ports 142 on the fluid ports 20 of the flange 100 during this process.

In the correct locking position, the fixing arms 136 finally engage behind the rear end face 114 of the flange 100 and hold the test apparatus 138 on the flange 100, ensuring that fluid ports 142 are connected pressure-tightly to fluid ports 20.

The screw fastener openings 21 on the flange 100, which are provided for final assembly, are not used to attach the test apparatus 138.

Figure 8 shows a second embodiment of a flange 200, on which the fixing structures 232 are not arranged on the narrow side 130 of the circumferential wall 230 of the flange 200 but on the broad sides 250 thereof.

Moreover, the opposite end faces 212, 214 are not rectangular but are of slightly oval design, wherein the broad sides 250 run straight and parallel to one another.

The webs forming the fixing structures 232 are of wider design than in the first embodiment but likewise extend over the entire height of the circumferential wall 216 between the end faces 212, 214.

Flanges having the shape of the flange 200 are used when the installation situation is such that engagement of the fixing arms 136 of the test apparatus 138 advantageously takes place from the broad side 250 of the flange 200. Of course, the fixing arms 136 must be matched to the shape of the fixing structures 232.

Apart from use for guidance and reliable positioning of the test apparatus 138, the fixing structures 132, 232 on the flange 100, 200 can also be used to ensure guidance and accurate positioning relative to the other components of the system which are to be connected to the respective flange 100, 200 during the final assembly of the vehicle air-conditioning system.

## Claims

1. Subassembly having a flange (100; 200) that has at least one fluid port (20), in particular for a vehicle air-conditioning system, which flange is connected fluid-tightly to at least one fluid line (18), and having a test apparatus (138), which has at least one fluid port (142) and two oppositely arranged movable fixing arms (136), wherein two fixing structures (132; 232), which come into engagement with the fixing arms (136) of the test apparatus (138) and hold the fluid port (20) of the flange (100; 200) in connection with the fluid port (142) of the test apparatus (138), are provided on oppositely situated sections of a circumferential wall (116; 216) of the flange (100; 200).

2. Subassembly according to Claim 1, **characterized in that** the fixing arms (136) each have a locking structure (134) complementary to the fixing structure (132; 232).

3. Subassembly according to one of Claims 1 and 2, **characterized in that** the fixing arms (136) each have a contact portion (140), which engages behind the flange (100; 200) on a rearward end face (114; 214).

4. Flange for a subassembly according to one of the preceding claims, **characterized in that** the flange (100; 200) has two parallel end faces (112, 114; 212, 214) and a circumferential wall (116; 216) extending between the end faces (112, 114; 212, 214), wherein at least one fluid port (20) of the flange (100; 200) is arranged on a first end face (112; 212), and fixing structures (132; 232) are formed on opposite sections of the circumferential wall (116; 216).

5. Flange according to Claim 4, **characterized in that** the fixing structure (132; 232) is in each case formed by a projection.

6. Flange according to Claim 5, **characterized in that** the projection extends over the entire height of the circumferential wall (116; 216) between the end faces (112, 114; 212, 214).

7. Flange according to one of Claims 4 to 6, **characterized in that** the fixing structure (132; 232) in each case has a constant width and, in particular, is a web of constant width.

8. Flange according to one of Claims 4 to 7, **characterized in that** the end faces (112, 114) of the flange (100) are substantially rectangular or oval and the fixing structures (132) are arranged on opposite narrow sides (130).

9. Flange according to one of Claims 4 to 7, **characterized in that** the end faces (212, 214) of the flange (200) are substantially rectangular or oval and the fixing structures (232) are arranged on opposite broad sides (250).

10. Flange according to one of Claims 4 to 9, **characterized in that** two fluid ports (20) are provided on the flange (100; 200).
